# EUROPEAN PATENT SPECIFICATION

(11) **EP 4 167 803 B1**
(45) Date of publication and mention of the grant of the patent: **03.04.2024**
(21) Application number: 21737193.9
(22) Date of filing: 17.06.2021
(51) Int. Cl.: A47J 31/30, A47J 31/52

(54) **ELECTRICALLY POWERED MACHINE FOR PREPARING COFFEE**
ELEKTRISCH BETRIEBENE KAFFEEMASCHINE
MACHINE À ALIMENTATION ÉLECTRIQUE POUR LA PRÉPARATION DE CAFÉ

(30) Priority: 18.06.2020 IT 202000014647
(43) Date of publication of application: 26.04.2023
(73) Proprietor: TRC S.r.l., 14100 Asti (IT)
(72) Inventor: TORCHIO, Giorgio, 14100 ASTI (IT); TORCHIO, Francesca, 14100 ASTI (IT)
(74) Representative: Garavelli, Paolo
(86) International application number: PCT/IT2021/050187
(87) International publication number: WO 2021/255769

(56) References cited:
- EP-A1- 3 323 325
- DE-U1-202009 017 448
- IT-A1- PG20 130 025
- US-A1- 2005 238 338
- US-A1- 2009 117 240

## Description

The present invention relates to an electrically powered machine for preparing coffee; in particular, the present invention refers to a mocha-type coffee maker with which it is possible to prepare mocha-type coffee, espresso and other types of coffee, which is electrically powered, for example by batteries, by means of a power cable connected to electric mains, capacitors or super capacitors.

Moka-type coffee machines are known in the art, and include a water boiler in which a funnel-shaped filter containing the coffee powder and an upper beverage collector connected to the boiler is positioned; the water in the boiler is heated to high temperatures and reaches a pressure that allows water to flow through the filter to the upper collector that collects the prepared drink. This process, especially due to the high temperatures of the boiler water that comes into contact with the coffee powder, significantly alters the organoleptic properties of the final drink, burning most of the fat component that gives body to the drink and produces its appreciated aroma. Therefore, the final drink is generally very fluid, of low thickness and not very aromatic. To obtain a high quality coffee, a very accurate control of all the parameters that come into play in the brewing process, from temperature to water pressure, is required. From patent ITMI20110743 an electric mocha and a control method of its infusion process are known, and are based on the piloting of an electric heating resistive element for the control of temperature, pressure and advancement speed of water in the various constitutive phases of the infusion process.

This known electric mocha allows controlling the infusion process by varying the ratio between the time in which the heating element is activated and the time in which it is not activated, and however has the problem of not allowing a precise and direct control of each delivery parameter, but only allows controlling the activation or deactivation of the heating element.

Another problem of known moka-type electric coffee machines is requiring an electrical outlet near the place of use, not allowing it to be used in any position and on any surface, requiring a heat-insulating support, due to the high temperature reached on the external surface of the boiler.

Documents US-A-2009/0117240 and EP-A-3323325 describe machines according to the prior art.

Object of the present invention is solving the aforementioned prior art problems by providing an electrically powered coffee preparation machine which allows to precisely control the infusion parameters, i.e. the temperature, the pressure and the mode of advancement of water, and also allows the machine to be used in any location and on any surface.

The aforementioned and other objects and advantages of the invention, which will emerge from the following description, are achieved with an electrically powered coffee preparation machine such as the one described in the independent claim. Preferred embodiments and non-trivial variants of the present invention form the subject of the dependent claims.

It is understood that all attached claims form an integral part of the present description.

It will be immediately obvious that innumerable variations and modifications (for example relating to shape, dimensions, arrangements and parts with equivalent functionality) can be made to what is described, without departing from the scope of the invention as appears from the attached claims.

The present invention will be better described by some preferred embodiments, provided by way of non-limiting example, with reference to the attached drawings, in which:

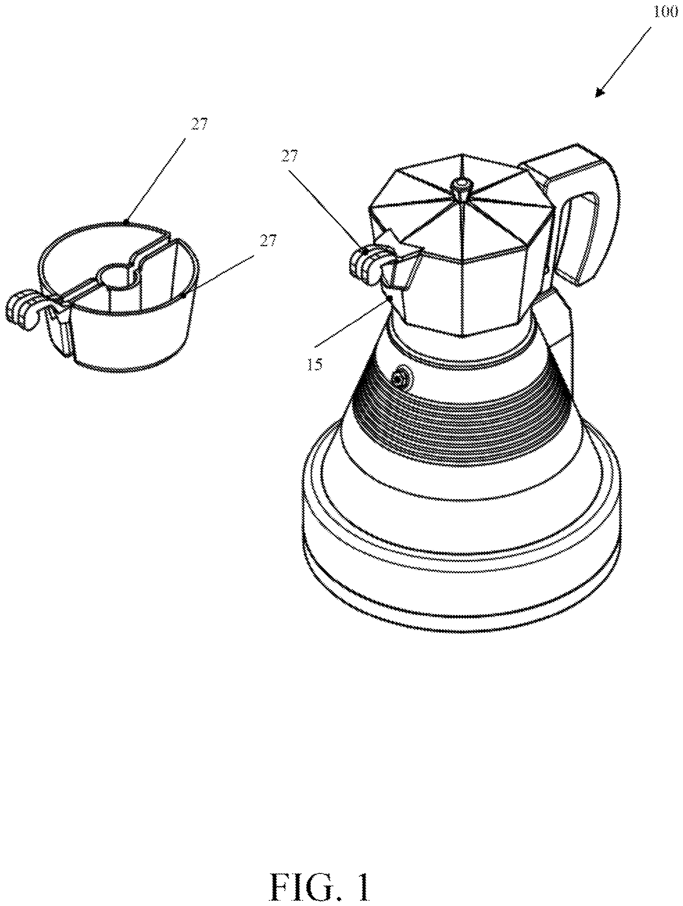

- Figure 1 is a perspective view of the electrically powered coffee preparation machine according to the present invention;

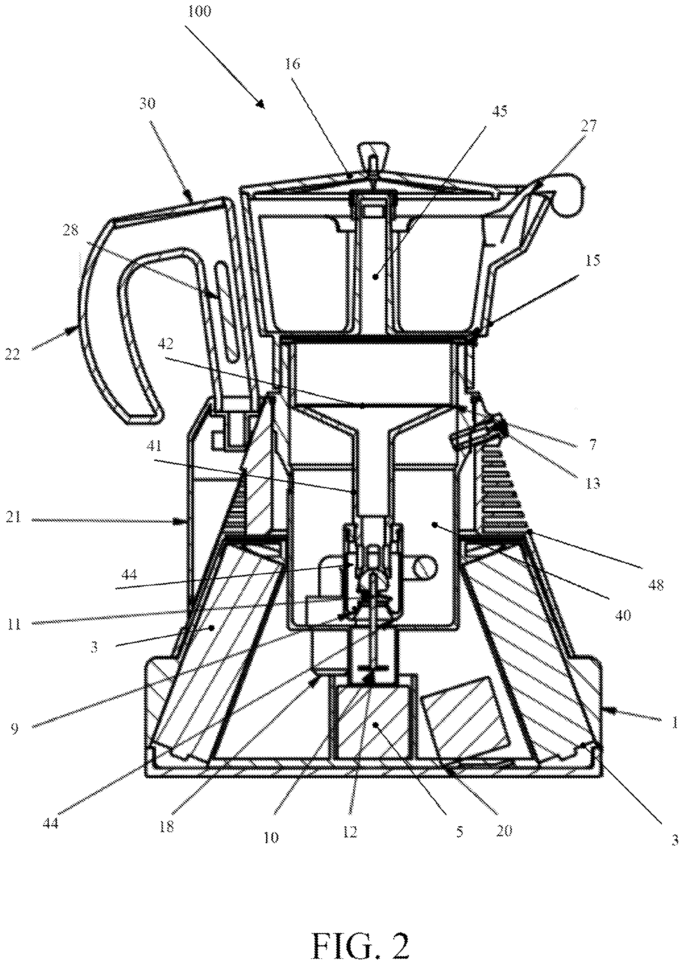

- Figure 2 is a sectional side view of an electrically powered coffee preparation machine according to the present invention; and

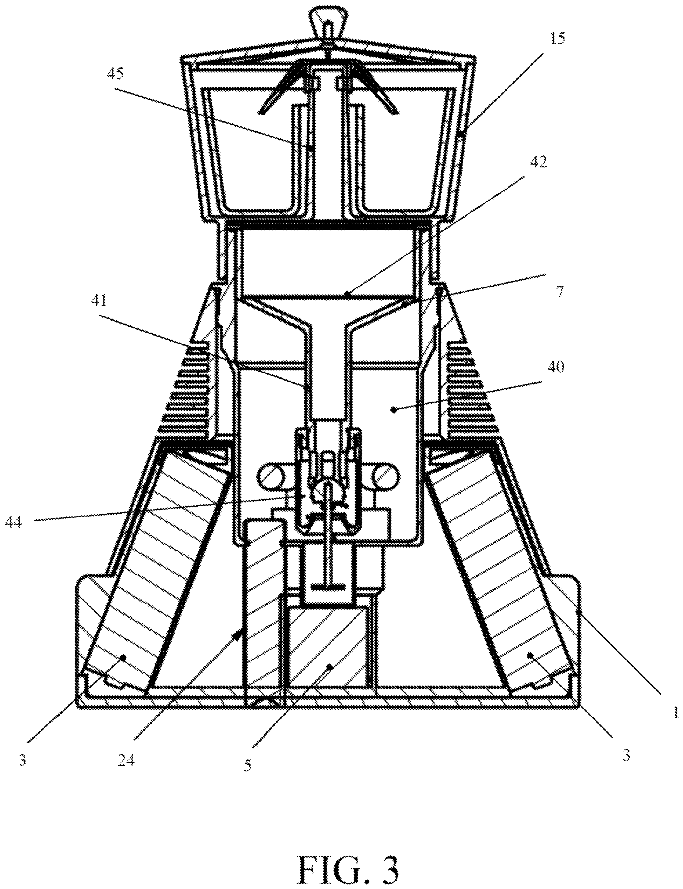

- Figure 3 is a sectional front view of an electrically powered coffee preparation machine according to the present invention.

With reference to the Figures, a preferred embodiment of the machine 100 for the preparation of coffee according to the present invention is illustrated and described, and comprises:
- a boiler 40 for water in which a funnel-shaped filter 7 configured to contain the coffee is positioned, and preferably comprising a chimney 41 associated with a perforated part 42 for containing the ground coffee; the filter 7 can be refilled with various substances in correspondence with the perforated part 42, for example coffee, tea, pods, capsules, preformed elements; the diameter, the material and the number of holes in the perforated part 42 of the filter 7 have variable dimensions according to the type of substance and drink to be obtained and in relation to the granulometry of the powder;
- a collector 15 connected to the boiler 40, preferably superimposed on the funnel-shaped filter 7 and the boiler 40 and engageable with said boiler 40, configured to collect the final drink which comes out of a collection duct 45; in a preferred embodiment of the invention, the collector houses two removable cups 27, in which the dispensed drink is collected; advantageously, the cups 27 preheat waiting to be filled both in the traditional way and using a special divider spout installed inside the collector 15, and also include the handle that comes out from the spout of the machine 100 to facilitate gripping;
- electrical power supply means 3, for example fixed or removable batteries 3 contained in a base 1 and rechargeable by cable, magnetic induction, solar panel or other alternative energy sources, offering a flexible charging solution that adapts to the possibilities and the place where the user is; in an embodiment of the invention, the electrical power supply means 3 comprise a power supply for connecting the machine 100 for the preparation of coffee directly to the electrical network via a power cable, without the presence of batteries 3;
- an element 18 for electric heating of the liquid in the boiler 40, for example a resistive element 18 positioned in the boiler 40;
- a valve 44 interposed between the funnel filter 7 and the boiler 40, preferably positioned in correspondence with a chimney 41 of the funnel filter 7, preferably a normally open valve 44, which can be closed again so as to prevent communication between the boiler 40 and the funnel 7 to allow the pre-set temperature and pressure to be reached inside the boiler 40, before being reopened to connect the boiler 40 and the funnel filter 7 and to bring the water and steam from the boiler 40 to the coffee contained in the filter funnel 7, allowing water and steam from the boiler 40 to rise along the chimney 41 of the filter 7 to reach the perforated part 42 for containing the coffee;

- air pumping means 20, preferably inserted in the machine 100, for example inserted in the base 1 or in the boiler 40, and connected with the outside to vary the pressure inside the boiler 40 by introducing or extracting air;
- an electronic water and steam delivery control system, comprising means for detecting (sensors) the temperature in the boiler 40, the temperature and level of the water contained in the boiler 40, means for detecting (sensors) the pressure in the boiler 40 and/or in the pumping means 20, said detection means being connected to an electronic control circuit, for example positioned in correspondence with the batteries 3, which comprises a processing and control unit comprising a microprocessor and storage means, a timer, spatial positioning detection means (sensors), a GPS module and wireless connection means, for example of the Wi-Fi and/or Bluetooth type, and/or via cable, for example a USB connector; preferably LED lights are connected to the electronic control circuit with the function of signaling machine operation, lighting or aesthetics. For example, the spatial positioning detection means comprise a multiaxial gyroscope having the function of verifying whether the machine 100 is in use, checking for any falls or blows and being used as a sensor to signal the angle suitable for overturning the coffee; the machine 100 of the invention can also be equipped with standard voice commands of a known type. The electronic control circuit is configured to control the delivery of water and steam from the boiler 40 to the collector 15 through the funnel filter 7, suitably controlling the valve 44 and the air pumping means 20 on the basis of the values detected by the means for detecting temperature, water level and pressure, and to parameters stored in the storage means; preferably, the means for detecting the temperature comprise at least one probe for detecting the temperature of the coffee arranged in the collector 15 and a thermometer positioned in correspondence with a lid 16 of the collector 15.

Preferably, the valve 44 is an electromagnetic valve and comprises an electromagnetic actuator 5 controlled by the control system, which controls the opening/closing of a closing element 11 of the valve 44, preferably in the shape of a sphere or hemisphere 11 pushed to open by a spring 9 is connected to a rod 10, connected in turn to a washer 12 made of ferromagnetic material which is attracted by the electromagnetic actuator 5 to control the opening of the valve 44; in other embodiments of the invention, the valve 44 can be operated by electric or magnetic actuators, or manually.

Advantageously, the valve 44 can also be controlled in such a way as to provide a rapid succession of openings and closings to cause a vibration, which can be controlled by the electronic control system and give rise to a wave of established frequency, used to obtain a uniform distribution of the coffee in the funnel filter 7, and consequently improve or adapt the extraction and therefore the result in the cup.

The machine 100 for the preparation of coffee of the invention can be made of metallic, organic, plastic material and comprises a heat-insulating handle 22 and control and command means, for example display 30 and keys 28 with electronic and/or mechanical and/or manual actuation; the machine 100 can also comprise, installed on the collection duct, mechanical or manual systems of a known type configured to increase the cream, slow down or divide or mix the outgoing liquid and the like, with the aim of improving the product in the cup.

Preferably, the boiler 40 comprises an external insulating structure 48 that prevents the transmission of heat so that, during the use of the machine 100, the external structure 48 of the boiler 40 remains cold and does not represent a danger to the user; the boiler 40 further comprises a safety spring valve 13 of a known type, configured to avoid excessive pressure increases in the boiler 40.

In one embodiment, the machine 100 for preparing coffee according to the invention further comprises a valve 24 for direct water injection, preferably positioned in the lower part of the machine 100 and configured to refill the water in the boiler 40 without having to previously disengage boiler 40 and collector 15, connecting the boiler 40 to an external tank equipped with a filter to improve the quality of the water.

Preferably, the batteries 3 of the machine 100 for the preparation of coffee of the invention are rechargeable, by induction or by connecting the machine with a cable or a connector, by means of an external support base which can comprise the tank for refilling the water.

Three different configurations of the machine 100 for the preparation of coffee according to the invention are described below.

In a first configuration, the machine 100 is able to work with only the power supply of the batteries 3, disconnected from the external support base and from the electrical power supply network, for example starting from 150cc of cold water at about 20 °C to deliver 90cc of coffee at a maximum temperature of 95 °C in about 200 seconds.

The machine 100 can be connected to the external support base for wireless charging, or by using other power ports such as an electric socket, USB connector and the like. In addition, when the removable battery pack 3 is used, it can be replaced by other charged spare batteries 3.

In a second configuration, the machine 100 must be connected to the external support base and is powered both by the batteries 3 and by the external support base which is connected to the power supply network via an electric cable, to supply the energy necessary to carry the water contained in the boiler 40 at a set temperature (about 70 °C); at this point, the machine 100 for preparing coffee can be disconnected from the external support base and moved, for example taken to a table in a bar or restaurant, while the battery 3 must supply only the energy necessary to finish the heating of the water and bring it to temperature, with the established pressure and time, for dispensing the beverage with the desired characteristics. Advantageously, since the difference between the temperature reached by the water in the boiler 40 when the machine 100 is connected to the external support base and the temperature to be reached for dispensing the beverage, is lower than that which occurs in the first configuration, the machine 100 of the second configuration requires batteries of lower power and therefore less expensive and performing. While the machine 100 for preparing coffee is connected to the external support base, in addition to heating the water, the batteries are recharged.

In a third configuration, the machine 100 is connected to the power supply network via cable, until the water contained in the boiler 40 reaches the desired pressure and temperature in the established time, for the delivery of coffee. When the machine 100 for making coffee is disconnected from the power supply to bring it to the table, you can no longer act on the settings but only pour the coffee.

The machine 100 for preparing coffee according to the invention can therefore be connected to different types of external support base which include: a device for wireless charging of the batteries 3 of the machine 100; an electric socket for quick charging, connected directly to the resistive element 18 of electric heating to bring the water contained in the boiler 40 to the supply temperature without using the batteries 3 of the machine 100.

The external support base can comprise a tank equipped with a filter and an electric or manual pump, and a quick connection for injecting water into the direct water injection valve 24 to refill water in the boiler 40 without having to disengage the boiler 40 and the collector 15.

In operation, the control system of the machine 100 for preparing coffee according to the invention can be programmed to deliver different coffee recipes, varying the temperature, pressure, delivery and pre-infusion time and number of pre-infusions, by acting in programmed times on the valve 44 and on the air pumping means 20 on the basis of the values detected by the means for detecting temperature, water level and pressure, to create recipes that adapt to different types of coffee and tastes of users.

The recipes can be created by controlling the machine 100 in different modes: manually using the display 30 and keys 28 present on the machine 100; via a smartphone connected to the machine via wireless (Wi-Fi and/or Bluetooth) using an APP, storing the recipes in the storage media and having the ability to interact with other machines for data exchange; by means of a terminal or a special console that allows easy and intuitive programming.

The machine 100 for preparing coffee according to the invention also allows, during a pre-infusion phase, to implement a function to verify the correctness of the temperature and pressure values set for use with the grain size of the coffee powder loaded in the filter. In fact, for each grain size of the coffee powder, it is necessary to use an appropriate pressure to overcome the resistance to the passage of water in the coffee powder itself, at a certain water temperature. If an insufficient pressure is set, for example due to the use of a coffee powder with the wrong grain size, the coffee will be too watery with too fast delivery, or, on the contrary, poor or no delivery, the so called over-extraction or under-extraction, both with unacceptable taste.

The control system of the machine 100 for the preparation of coffee of the invention makes it possible to use the data read by the sensors to check at a user request, during a pre-infusion phase, whether the coffee powder in the funnel filter 7 has an incorrect particle size, by measuring the speed with which the pressure in the boiler 40 decreases, to understand the resistance to the passage of water opposed by the powder.

In fact, the greater the speed of pressure decrease in the boiler 40, the smaller the particle size of the powder, and vice versa, so by measuring the difference between the instantaneous pressure value and the pressure value calculated on the basis of an optimal pressure curve, the set values can be corrected by increasing or decreasing the pressure of the subsequent extraction to obtain a coffee of optimal quality, even in the event of incorrect coffee grinds.

An example of a coffee recipe will now be described, achievable with the machine 100 for the preparation of coffee according to the invention:
1) use of a medium quality coffee, ground for classic moka (500-600 microns) with a standard filter (standard width holes evenly arranged);
2) setting of a pre-infusion at a temperature of 75 °C, pressure 1.4 bar for a time of 20 seconds;
3) setting of a classic extraction at 90 °C with a pressure of 1.9 bar;
4) closing of the water supply before the complete emptying of the boiler 40, to avoid having the saturated steam of the boiler being extracted, which would cause a bitter taste;
5) end of dispensing and extraction due to exhaustion of 150 cc of water or to reaching a set time.

Advantageously, with the program or the APP, it is possible to create dynamic curves and then vary the temperature, pressure and delivery time throughout the extraction, using the data provided by the sensors.

Advantageously, the machine 100 for preparing coffee according to the present invention allows precisely controlling the infusion parameters such as extraction time, temperature and water pressure.

Advantageously, the machine 100 for preparing coffee according to the invention allows using the Wireless charging, without having to use fire or induction to heat the machine 100, allowing it to be used in any position and on any surface.

## Claims

1. Machine (100) for making coffee which includes:
- a boiler (40) for the water in which a funnel filter (7) configured to contain the coffee is positioned;
- a collector (15) connected to the boiler (40) and engageable with said boiler (40), configured to collect the final drink that comes out of a collection duct (45);
- electrical power supply means (3);
- an element (18) for electric heating of the liquid in the boiler (40);
- air pumping means (20) to vary the pressure inside the boiler (40) by introducing or extracting air;
- an electronic control system for the delivery of water and steam from the boiler (40) to the collector (15) through the funnel filter (7), configured to control and command the air pumping means (20);
**characterized in that** it also includes:
- a valve (44) interposed between the funnel filter (7) and the boiler (40), which can be closed again so as to prevent communication between the boiler (40) and the funnel filter (7) to allow reaching inside the boiler (40) a pre-established temperature and pressure, before being reopened to connect the boiler (40) and the funnel filter (7) and bring the water and steam from the boiler (40) to the coffee contained in the funnel filter (7); and
- said electronic control system of water and steam delivery from the boiler (40) to the collector (15) through the funnel filter (7), being further configured to control and command the valve (44).

2. Machine (100) for preparing coffee according to claim 1, **characterized in that** the valve (44) is operated in opening and closing by the electronic control system.

3. Machine (100) for preparing coffee according to claim 1 or 2, **characterized in that** the valve (44) is controlled in such a way as to provide a rapid succession of openings and closings to cause a vibration used to obtain a uniform distribution of the coffee in the funnel filter (7).

4. Machine (100) for preparing coffee according to any one of the preceding claims, **characterized in that** the funnel filter (7) comprises a chimney (41) associated with a perforated part (42) for containing the ground coffee to connect boiler (40) and funnel filter (7), allowing water and steam from the boiler (40) to go up along the chimney (41) to reach the perforated part (42) containing coffee, and **characterized in that** the valve (44) is positioned in correspondence with the chimney (41).

5. Machine (100) for preparing coffee according to any one of the preceding claims, **characterized in that** the valve (44) is a normally open valve.

6. Machine (100) for preparing coffee according to any one of the preceding claims, **characterized in that** it comprises means for detecting the temperature of the boiler (40), the temperature and the level of water contained in the boiler (40), means for detecting the pressure in the boiler (40) and/or in the pump (20), said detection means being connected to an electronic control circuit which comprises a processing and control unit comprising a microprocessor and storage means, a timer, spatial positioning detection means, a GPS module and wireless and/or cable connection means, said electronic control circuit being configured to control the supply of water and steam by controlling the valve (44) and the air pumping means (20) based on the values detected by the means for detecting temperature, water level and pressure, and parameters stored in the storage media.

7. Machine (100) for preparing coffee according to any one of the preceding claims, **characterized in that** the electrical power supply means comprise fixed or removable batteries (3) contained in the machine (100) and/or rechargeable by induction or by connecting the machine with a cable or a connector by means of an external support base, or **characterized in that** the power supply means comprise a power supply for connecting the machine (100) directly to the electrical network by means of a power supply cable.

8. Machine (100) for preparing coffee according to any one of the preceding claims, **characterized in that** it comprises a direct water injection valve (24) configured to refill the water in the boiler (40) without having to first disengage the boiler (40) and collector (15), connecting the boiler (40) to an external tank.

9. Machine (100) for preparing coffee according to any one of the preceding claims, **characterized in that** the collector houses two removable cups (27), in which the dispensed drink is collected.

10. Machine (100) for preparing coffee according to any one of the preceding claims, **characterized in that** it is controlled manually using the display (30) and/or keys (28) present on the machine (100), via a smartphone connected to the machine via wireless using an APP, memorizing recipes in the storage media and having the possibility to interact with other machines for data exchange or by means of a terminal or a special console.

## Patentansprüche

1. Maschine (100) zur Kaffeezubereitung, umfassend:
- einen Boiler (40) für Wasser, in dem ein Trichterfilter (7) zur Aufnahme des Kaffees angeordnet ist;
- einen Sammler (15), der mit dem Boiler (40) verbunden und mit dem Boiler (40) in Eingriff bringbar ist und so konfiguriert ist, dass er das aus einem Sammelkanal (45) austretende Endgetränk auffängt;
- Mittel zur elektrischen Stromversorgung (3);
- ein Element (18) zur elektrischen Erwärmung der Flüssigkeit im Kessel (40);
- Luftpumpmittel (20), um den Druck im Inneren des Kessels (40) durch Einführen oder Absaugen von Luft zu variieren;
- ein elektronisches Steuersystem für die Lieferung von Wasser und Dampf vom Kessel (40) zum Sammler (15) durch den Trichterfilter (7), das so konfiguriert ist, dass es die Luftpumpmittel (20) steuert und steuert;
**dadurch gekennzeichnet, dass** es auch Folgendes umfasst:
- ein Ventil (44), das zwischen dem Trichterfilter (7) und dem Boiler (40) angeordnet ist und geschlossen werden kann, um eine Verbindung zwischen Boiler (40) und Trichterfilter (7) zu verhindern und den Zugang zum Inneren zu ermöglichen den Boiler (40) auf voreingestellte Temperatur und Druck, bevor er wieder geöffnet wird, um den Boiler (40) und den Trichterfilter (7) zu verbinden und zu ermöglichen, dass Wasser und Dampf aus dem Boiler (40) den im Trichter enthaltenen Kaffee erreichen Filter (7); und
- das elektronische System zur Steuerung der Zufuhr von Wasser und Dampf vom Kessel (40) zum Sammler (15) durch den Trichterfilter (7), das so konfiguriert ist, dass es das Ventil (44) steuert und steuert.

2. Maschine (100) zur Kaffeezubereitung nach Anspruch 1, **dadurch gekennzeichnet, dass** das Ventil (44) durch das elektronische Steuersystem zum Öffnen und Schließen gesteuert wird.

3. Maschine (100) zur Kaffeezubereitung nach Anspruch 1 oder 2, **dadurch gekennzeichnet, dass** das Ventil (44) so gesteuert wird, dass es eine schnelle Abfolge von Öffnungen und Schließungen durchführt, um eine Vibration zu bewirken, die zur Erzielung einer gleichmäßigen Verteilung des Kaffees dient Kaffee in den Trichterfilter (7).

4. Maschine (100) zur Kaffeezubereitung nach einem der vorhergehenden Ansprüche, **dadurch gekennzeichnet, dass** der Trichterfilter (7) einen Kamin (41) umfasst, der mit einem perforierten Teil (42) zur Aufnahme des gemahlenen Kaffees für den Kessel verbunden ist ( 40) und Trichterfilter (7) in Verbindung, so dass Wasser und Dampf aus dem Boiler (40) durch den Kamin (41) nach oben gelangen können, um den perforierten Teil (42) zu erreichen, der den Kaffee enthält, und **dadurch gekennzeichnet, dass** das Ventil (44) ist in Übereinstimmung mit dem Schornstein (41) positioniert.

5. Maschine (100) zur Kaffeezubereitung nach einem der vorhergehenden Ansprüche, **dadurch gekennzeichnet, dass** das Ventil (44) ein normalerweise offenes Ventil ist.

6. Maschine (100) zur Kaffeezubereitung nach einem der vorhergehenden Ansprüche, **dadurch gekennzeichnet, dass** sie Mittel zur Erfassung der Temperatur des Boilers (40), der Temperatur und des Füllstands des im Boiler (40) enthaltenen Wassers umfasst zur Erfassung des Drucks im Kessel (40) und/oder in der Pumpe (20), wobei die Erfassungsmittel mit einem elektronischen Steuerkreis verbunden sind, der eine Verarbeitungs- und Steuereinheit mit einem Mikroprozessor und Speichermitteln, einem Zeitgeber und einer räumlichen Positionserkennung umfasst Mittel, ein GPS-Modul und drahtlose und/oder kabelgebundene Verbindungsmittel, wobei die elektronische Steuerschaltung so konfiguriert ist, dass sie die Zufuhr von Wasser und Dampf durch Steuerung und Steuerung des Ventils (44) und der Luftpumpmittel (20) auf der Grundlage der Werte steuert erfasst durch die Temperatur-, Wasserstands- und Druckerkennungsmittel und auf Parametern, die in den Speichermitteln gespeichert sind.

7. Maschine (100) zur Zubereitung von Kaffee nach einem der vorhergehenden Ansprüche, **dadurch gekennzeichnet, dass** die elektrischen Energiemittel feste oder austauschbare Batterien (3) umfassen, die in der Maschine (100) enthalten sind und/oder durch Induktion oder durch Anschließen der Maschine wiederaufladbar sind mit einem Kabel oder einem Stecker mittels einer externen Stützbasis, oder **dadurch gekennzeichnet, dass** die elektrischen Stromversorgungsmittel ein Netzteil umfassen, um die Maschine (100) über ein Stromkabel direkt an das Stromnetz anzuschließen.

8. Maschine (100) zur Kaffeezubereitung nach einem der vorhergehenden Ansprüche, **dadurch gekennzeichnet, dass** sie ein direktes Wassereinspritzventil (24) umfasst, das so konfiguriert ist, dass es das Wasser im Boiler (40) nachfüllt, ohne dass der Boiler (40) zuvor ausgeschaltet werden muss und Kollektor (15), der den Kessel (40) mit einem externen Tank verbindet.

9. Maschine (100) zur Kaffeezubereitung nach einem der vorhergehenden Ansprüche, **dadurch gekennzeichnet, dass** der Sammelbehälter zwei herausnehmbare Becher (27) beherbergt, in denen das ausgegebene Getränk gesammelt wird.

10. Maschine (100) zur Kaffeezubereitung nach einem der vorhergehenden Ansprüche, **dadurch gekennzeichnet, dass** sie manuell über das Display (30) und/oder die an der Maschine (100) vorhandenen Tasten (28) über ein mit der Maschine (100) verbundenes Smartphone gesteuert wird Maschine drahtlos über eine APP, Speicherung von Rezepten auf Speichermedien und Möglichkeit der Interaktion mit anderen Maschinen zum Datenaustausch oder über ein Terminal oder eine spezielle Konsole.

## Revendications

1. Machine (100) pour préparer du café qui comprend :
- une chaudière (40) pour l'eau dans laquelle est positionné un filtre en entonnoir (7) configuré pour contenir le café;
- un collecteur (15) relié à la chaudière (40) et pouvant venir en prise avec ladite chaudière (40), configuré pour collecter la boisson finale qui sort d'un conduit de collecte (45);
- des moyens d'alimentation électrique (3);
- un élément (18) de chauffage électrique du liquide dans la chaudière (40);
- des moyens de pompage d'air (20) pour faire varier la pression à l'intérieur de la chaudière (40) en introduisant ou en extrayant de l'air;
- un système de contrôle électronique pour l'acheminement de l'eau et de la vapeur de la chaudière (40) au collecteur (15) à travers le filtre à entonnoir (7), configuré pour contrôler et commander les moyens de pompage d'air (20);
**caractérisé par le fait qu'**il comprend également:
- une vanne (44) placée entre le filtre entonnoir (7) et la chaudière (40), qui peut être fermée de manière à empêcher la communication entre la chaudière (40) et le filtre entonnoir (7) pour permettre l'accès à l'intérieur de la chaudière (40) de température et pression préétablies, avant d'être rouverte pour connecter la chaudière (40) et l'entonnoir filtre (7) et permettre à l'eau et à la vapeur de la chaudière (40) d'atteindre le café contenu dans l'entonnoir filtre (7); et
- ledit système électronique de contrôle du débit d'eau et de vapeur de la chaudière (40) au collecteur (15) à travers le filtre à entonnoir (7), qui est configuré pour contrôler et commander la vanne (44).

2. Machine (100) de préparation de café selon la revendication 1, **caractérisée en ce que** la vanne (44) est commandée en ouverture et en fermeture par le système de commande électronique.

3. Machine (100) de préparation de café selon la revendication 1 ou 2, **caractérisée en ce que** la vanne (44) est commandée de manière à réaliser une succession rapide d'ouvertures et de fermetures pour provoquer une vibration permettant d'obtenir une répartition uniforme du café, café dans le filtre entonnoir (7).

4. Machine (100) de préparation de café selon l'une quelconque des revendications précédentes, **caractérisée en ce que** le filtre à entonnoir (7) comprend une cheminée (41) associée à une partie perforée (42) pour contenir la mouture de café pour mettre la chaudière (40) et filtre entonnoir (7) en communication, permettant à l'eau et à la vapeur de la chaudière (40) de remonter le long de la cheminée (41) pour atteindre la partie perforée (42) contenant le café, et **caractérisé par le fait que** le clapet (44) est positionné en correspondance avec la cheminée (41).

5. Machine (100) de préparation de café selon l'une quelconque des revendications précédentes, **caractérisée en ce que** la vanne (44) est une vanne normalement ouverte.

6. Machine (100) de préparation de café selon l'une quelconque des revendications précédentes, **caractérisée en ce qu'**elle comprend des moyens de détection de la température de la chaudière (40), de la température et du niveau de l'eau contenue dans la chaudière (40), des moyens pour détecter la pression dans la chaudière (40) et/ou dans la pompe (20), lesdits moyens de détection étant connectés à un circuit électronique de commande qui comprend une unité de traitement et de commande comprenant un microprocesseur et des moyens de stockage, une minuterie, une détection de positionnement spatial des moyens, un module GPS et des moyens de connexion sans fil et/ou par câble, ledit circuit électronique de contrôle étant configuré pour contrôler l'alimentation en eau et en vapeur en contrôlant et commandant la vanne (44) et les moyens de pompage d'air (20) en fonction des valeurs détectées par les moyens de détection de température, de niveau d'eau et de pression, et sur des paramètres stockés dans les moyens de stockage.

7. Machine (100) de préparation de café selon l'une quelconque des revendications précédentes, **caractérisée en ce que** les moyens d'alimentation électrique comprennent des batteries fixes ou amovibles (3) contenues dans la machine (100) et/ou rechargeables par induction ou par connexion de la machine. avec un câble ou un connecteur au moyen d'une base de support externe, ou **caractérisé en ce que** les moyens d'alimentation électrique comprennent une alimentation pour connecter la machine (100) directement au réseau électrique via un câble d'alimentation.

8. Machine (100) de préparation de café selon l'une quelconque des revendications précédentes, **caractérisée en ce qu'**elle comprend une vanne d'injection directe d'eau (24) configurée pour remettre de l'eau dans la chaudière (40) sans avoir à débrayer au préalable la chaudière (40) et collecteur (15), reliant la chaudière (40) à un réservoir extérieur.

9. Machine (100) pour préparer du café selon l'une quelconque des revendications précédentes, **caractérisée en ce que** le collecteur abrite deux tasses amovibles (27), dans lesquelles la boisson distribuée est collectée.

10. Machine (100) de préparation de café selon l'une quelconque des revendications précédentes, **caractérisée en ce qu'**elle est commandée manuellement à l'aide de l'afficheur (30) et/ou de touches (28) présentes sur la machine (100), via un smartphone connecté au machine via sans fil à l'aide d'une APP, stockant des recettes sur le support de stockage et ayant la possibilité d'interagir avec d'autres machines pour l'échange de données ou au moyen d'un terminal ou d'une console spéciale.
